# EUROPEAN PATENT APPLICATION

(11) **EP 1 326 437 A2**
(43) Date of publication of application: **09.07.2003**
(21) Application number: 02028079.8
(22) Date of filing: 17.12.2002
(51) Int. Cl.: H04N 5/445

(54) **System and method for preparing a tv viewing schedule**

(30) Priority: 20.12.2001 JP 2001387410
(71) Applicant: Pioneer Corporation, Meguro-ku, Tokyo (JP)
(72) Inventor: Hasebe, Tsuyoshi, Tokorozawa-City, Saitama (JP); Takahashi, Tsutomu, Tokorozawa-City, Saitama (JP); Higuchi, Masao, Tokorozawa-City, Saitama (JP); Inagaki, Katsutoshi, Tokorozawa-City, Saitama (JP); Watanabe, Kazutomo, Tokorozawa-City, Saitama (JP); Shirosaki, Yasuo, Tokorozawa-City, Saitama (JP); Minoshima, Kunihiro, Tokorozawa-City, Saitama (JP); Yamamura, Gaku, Tokorozawa-City, Saitama (JP); Morioka, Ryuichiro, Tokorozawa-City, Saitama (JP); Tanaka, Yoshitaka, Tokorozawa-City, Saitama (JP)
(74) Representative: Betten & Resch

(57) **Abstract**

A plurality of programs are broadcast from at least one station. A system for preparing a program viewing schedule includes a program guide extractor for extracting a broadcast program guide. The broadcast program guide includes program characteristic data. The system also includes a frequency data generator for generating frequency data with regard to the program characteristic data, based on a program viewing history and/or a program recording history. A recorded program data extractor of the system extracts recorded program data. The recorded program data includes a time needed to record each program. A broadcast program allocator of the system selects a program from the broadcast program guide, based on the frequency data, and allocates the selected program in the program viewing schedule. A recorded program allocator of the system determines which program has not been viewed among the recorded programs, and allocates the unwatched program into a vacant area in the program viewing schedule.

## Description

### BACKGROUND OF THE INVENTION

### 1. Field of the Invention

The present invention relates to a system for preparing a TV viewing schedule and a method for preparing the TV viewing schedule.

### 2. Description of the Related Art.

When a user of a TV set selects and/or views a TV program, the user usually sees a TV program listing in a newspaper or a TV program magazine. If the user has a communication device (e.g., personal computer), the user may operate the communication device to access the Internet and find a TV listing since some Internet web pages provide TV listings. If the TV set can receive digital TV signals, the user can receive a TV listing (i.e., electronic program guide (EPG)) from a broadcast wave by operating a remote controller of the TV set since the EPG is carried (broadcast) together with TV programs. The user can manipulate the remote controller of the TV set to display the EPG on a TV screen. A TV listing similar to that shown in the newspaper appears on the TV screen.

In recent years, the broadcast channels have increased so that it has become difficult for the user to select and view all of the user's favorite programs from the EPG. In general, the user utilizes a single TV set to view recorded TV programs and currently broadcast TV programs. In order not to miss favorite TV programs which are scheduled to be broadcast, the user must prepare a good TV Viewing schedule for the recorded programs and on-air programs.

### SUMMARY OF THE TNVENTTON

An object of the present invention is to provide a system and method that can prepare a user's TV viewing schedule such that a user can view favorite scheduled TV programs and recorded TV programs.

According to one aspect of the present invention, there is provided a system for preparing a program viewing schedule, comprising: a program guide extractor for extracting a broadcast program guide including program characteristic data, a plurality of programs being broadcast from at least one station; a frequency data generator for generating frequency data with regard to the program characteristic data, based a program viewing history and/or a program recording history; a recorded program data extractor for extracting recorded program data, the recorded program data including a time needed to record each program; a broadcast program allocator for selecting a program from the broadcast program guide, based on the frequency data, and allocating the selected program in the program viewing schedule; and a recorded program allocator for determining which program has not been viewed among the recorded programs, and allocating the unviewed program to a vacant area in the program viewing schedule.

The system can prepare a TV viewing schedule which matches preference of a user of the system. In general, the TV viewing schedule includes recorded programs and on-air programs.

According to another aspect of the present invention, there is provided a method of preparing a program viewing schedule, comprising the steps of; extracting a broadcast program guide including program characteristic data, a plurality of programs being broadcast from at least one station; producing frequency data with regard to the program characteristic data, based on a program viewing history and/or a program recording history; extracting recorded program data which includes a time needed to record each program; selecting a program from the broadcast program guide, based on the frequency data, and allocating the selected program in the program viewing schedule; and determining which program has not been viewed among the recorded programs, and allocating the unvlewed program into a vacant area in the program viewing schedule.

### BRIEF DESCRIPTION OF THE DRAWINGS

Figure 1 is a block diagram for illustrating a schematic constitution of a recording apparatus which includes a TV program viewing schedule preparing system according to the present invention;
Figure 2 illustrates data stored in a program information memory of the recording apparatus shown in Figure 1;
Figure 3 is a flowchart of a main routine for preparing a TV viewing schedule;
Figure 4 is a flowchart of a subroutine for deciding a time zone of the TV viewing schedule;
Figure 5 illustrates EPG corresponding to the time zone;
Figure 6 is a flowchart of a subroutine for extracting broadcast programs;
Figure 7 illustrates an example of a provisional schedule;
Figure 8 is a flowchart of a subroutine for filling recorded programs in the TV viewing schedule; and
Figure 9 illustrates an example of a final TV viewing schedule.

### DETAILED DESCRIPTION OF THE INVENTION

Embodiments of the present invention will be described in detail with reference to the drawings.

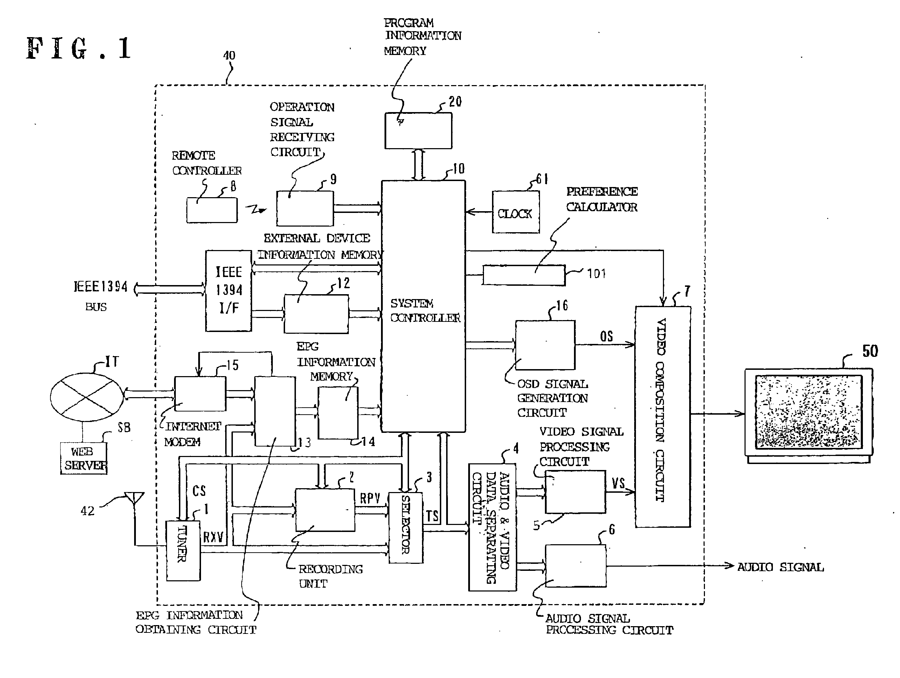

Referring to Figure 1, a block diagram of a recording apparatus 40, encircled by the broken rectangular line, is illustrated. The recording apparatus 40 includes a system for preparing a user's TV program viewing schedule according to a first embodiment of the present invention.

The recording apparatus 40 receives a plurality of TV broadcast waves (simply referred to as "broadcast waves") from broadcast stations by an antenna 42 or a cable (not shown), and supplies the broadcast waves to a TV tuner 1 The TV tuner 1 then selects a single broadcast wave which corresponds to a channel designated by a channel select signal CS. The TV tuner 1 obtains a TV signal RXV by demodulating the broadcast wave, and outputs the TV signal RXV to a video recording unit 2 and other elements. The TV signal RXV is an information block representing the TV program broadcast from a TV station. The video recording unit 2 includes, for instance, a magnetic disk, an optical disk, a magnetic tape and/or a semiconductor memory, as a built-in recording medium. The video recording unit 2 stores the TV signal RXV in the built-in recording medium in response to a recording start signal supplied from a system controller 10. If a playback start signal and a playback start address are supplied to the recording unit 2 from the system controller 10, the recording unit 2 reads a recorded TV signal from a position indicated by the playback start address on the recording medium, and supplies the TV signal, as a playback TV signal RPV, to a selector 3. The selector 3 selects the broadcast (received) signal RXV or the playback signal RPV in accordance with a selection signal supplied from the system controller 10, and supplies the selected signal, as a TV signal TS, to an audio (voice/sound) and video (image) data separating circuit 4 and the system controller 10. The audio and video data separating circuit 4 separates the TV signal TS into the audio data and the video data, and supplies the video data to a video signal processing circuit 5 and the audio data to an audio signal processing circuit 6. The audio signal processing circuit 6 produces an audio signal, which is obtained by applying a predetermined audio demodulation process to the audio data. The video signal processing circuit 5 produces a video signal VS, which is obtained by applying a predetermined video demodulation processing to the video data, and supplies the video signal VS to a video composition circuit 7.

A remote controller 8 has various operation buttons such that the user can enter instructions. The remote controller 8 transmits an operation signal, which is generated in accordance with one or more buttons pushed by the user, to an operation signal receiving circuit 9. The operation signal receiving circuit 9 receives the operation signal from the remote controller 8, and transfers the operation signal to the system controller 10.

An IEEE1394 interface circuit 11 transmits and receives data to and from various information devices (not shown; referred to as "external devices") that are connected to an IEEE1394 bus. The IEEE1394 Interface circuit 11 packets a TV signal (including an MPEG TV signal) which is supplied from the system controller 10 and transmits the packet signal to the IEEE1394 bus. The IEEE1394 interface circuit 11 also receives audio data, video data and instructions from the external devices, and supplies the data and instructions to the system controller 10. The system controller 10 then records the audio and video data in the recording unit 2. Further, the IEEE1394 interface circuit 11 receives operation condition data from the external devices, and stores the operation condition data in an external device information memory 12. The operation condition data includes the type of external device concerned, a present operating condition, and the like. The operating condition indicates that the external device is now recording a TV program, playing back a TV program or stopped, together with a content name (i.e., TV program title) recorded or played back at the present time. The type of the external device may be a digital video camera, a personal computer, a DVD recorder or the like.

An EPG information obtaining circuit 13 extracts the EPG information from the TV signal RXV if the EPG information is superimposed on the TV signals RXV outputted from the TV tuner 1. The EPG information obtaining circuit 13 then stores the EPG information in an EPG information memory 14. The EPG information includes titles of programs to be broadcast, dates or broadcasting, channel numbers, genres of the programs, time zones of broadcasting, contents of the programs, keywords of the program contents, and the like. The genre of the program is, for example, news, sports, drama, movie, music, for children, animation, education or entertainment. The keyword of the program content is, for example, casts (featuring performers), author, director, name of a series, name of music used in the program, and area of broadcasting. On the other hand, if the EPG information data is not superimposed on the received TV signals RXV, the EPG information obtaining circuit 13 transmits an EPG request to an Internet modem 15. The Internet modem 15 accesses a web server SB, which is connected to the Internet IT, in response to the EPG request. The web server SB stores the EPG information which represents program names to be broadcasted, broadcasting dates, channel numbers, program genres, broadcasting time zones, program contents, and program content keywords for each broadcast station. The web server SB also stores TV rating (audience share) data of programs that have been broadcast in the past. The web server SB transmits the EPG information data to the Internet modem 15 through the Internet IT in response to the access from the Internet modem 15. The Internet modem 15 receives the EPG information from the Internet IT, and supplies the EPG information to the EPG information obtaining circuit 13. The EPG information obtaining circuit 13 then stores the EPG information in an EPG information memory 14.

The EPG information obtaining circuit 13 regularly transmits a TV rating request to the Internet modem 15. The Internet modem 15 accesses the web server SB in response to the TV rating request. THUS, the EPG information obtaining circuit 13 retrieves the recent TV rating data that is held by the web server SB, and stores the recent (updated) TV rating data in the EPG information memory 14.

The system controller 10 issues various display data to an OSD (On Screen Display) signal generating circuit 16. Upon receiving the display data from the system controller 10, the OSD signal generating circuit 16 generates an OSD image signal OS to display an image represented by the display data on a screen of a display device 50, and supplies the OSD image signal OS to the image composition circuit 7. The image composition circuit 7 supplies the video signal VS with the OSD image signal OS superimposed thereon or any one of the video signal VS and the OSD image signal OS to the display device 50 as a final image signal, in response to an image composition command supplied from the system controller 10. The display device 50 displays the image on the screen on the basis of the final image signal.

A clock 61 having a timer function as well as a calendar function is connected to the system controller 10. The system controller 10 stores information about recorded programs, that are recorded by the recording unit 2, in a program information memory 20. Specifically, various video recording information such as the EPG information of the recorded programs and recording times required for the respective programs is stored.

Now, an operation of the system controller 10 will be described.

The system controller 10 controls the TV tuner 1, the recording unit 2, the selector 3 and the video composition circuit 7 on the basis of the operation signals transmitted from the remote controller 8. For example, if the user performs a TV station selecting operation by pushing a channel selection button (not illustrated) on the remote controller 8, the system controller 10 supplies a channel selection signal to the TV tuner 1 to select a TV station designated by the pushed button. As a result, a TV signal from the broadcast station which has been designated by the channel selection button is output from the TV tuner 1. The TV signal is then supplied to the display unit 50 through the selector 3, the audio and video data separating circuit 4, the video signal processing circuit 5 and the video composition circuit 7. Thus, the TV program from the broadcast station, which is designated by the channel selection button, is displayed on the screen of the display device 50. If the user pushes a recording button (not illustrated) on the remote controller 8, the system controller 10 supplies the video recording start signal to the recording unit 2. Accordingly, the recording unit 2 records the TV signal RXV, that is output from the TV tuner 1, in the built-in recording medium. If the user pushes a playback button (not illustrated) on the remote controller 8, the system controller 10 supplies a playback start command to the recording unit 2, and supplies a selection signal to the selector 3 so that the selector 3 selects the playback TV signal RPV which has been issued from the recording unit 2. Therefore, the playback TV signal RPV from the video recording unit 2 is supplied to the display unit 50 through the selector 3, the audio and video data separating circuit 4, the video signal processing circuit 5 and the video composition circuit 7. Thus, the TV program that has been recorded in the recording unit 2 is reproduced and displayed.

If a TV request is issued to the system controller 10 from the external device via the IEEE1394 interface circuit 11, the system controller 10 transfers the TV signal TS, which is output from the selector 3, to the IEEE1394 bus via the IEEE1394 interface circuit 11 so that the TV program can be used at the external device. If a recordation request is issued to the system controller 10 from the external device, the system controller 10 records the TV signal, which is provided from the external device through the IEEE1394 bus and the IEEE1394 interface circuit 11, in the recording unit 2.

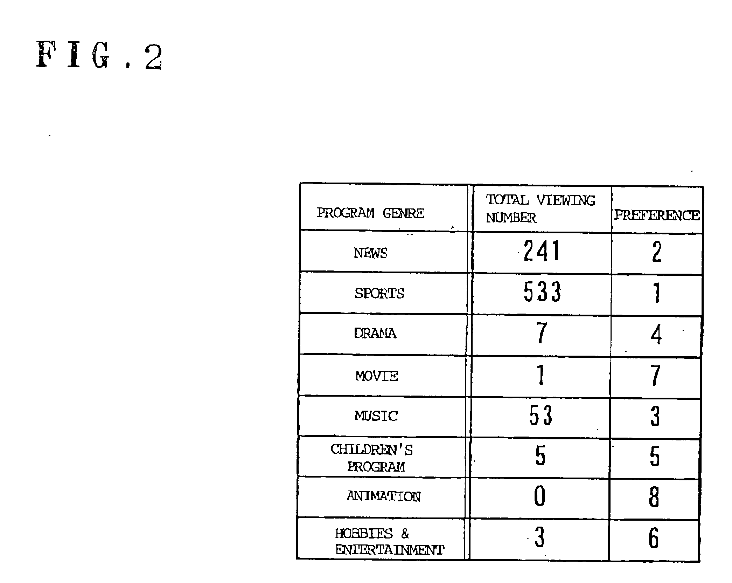

The system controller 10 also includes a preference calculator 101 for statistically determining preference of the user of the recording apparatus 40. Preference data is stored in the program information memory 20. Factors to determine the preference of the user (referred to as "program characteristic factors") include a program genre, a program key word, a cast and the like. The user can decide the program characteristic factor(s). Alternatively, the recording apparatus 40 may decide the factor(s) by initial setting. Referring now to Figure 2, if the program genre is selected as the program characteristic factor, the program information memory 20 defines three columns, i.e., a column for the genres, a column for total number of viewing, and a column for preference. The preference is expressed by the order (ranking). The preference calculator 101 first determines the genre of the program, which is currently broadcast from a TV station selected by the user, from the EPG data stored in the EPG information memory 14. The preference calculator 101 then rewrites the data in the "# of total viewing" column of the program information memory 20 for this particular genre by incrementing the data by one. The preference calculator 101 attaches the ranking to the total number of viewing, as shown in Figure 2. Every time the increment occurs in the "# of total viewing" column, the ranking is checked and rewritten if necessary. In this manner, the preference for the program genres of the user who sees the TV programs with the recording apparatus 40 (Figure 1) is obtained. Accordingly, the program information memory 20 functions as a database of the user's preference. It should be noted that the preference calculator 101 may determine the preference on the basis of a program recording history, instead of the currently broadcast program viewing history. Further, the method for determining the preference is not limited to the above described one. Any suitable statistical approach may be utilized.

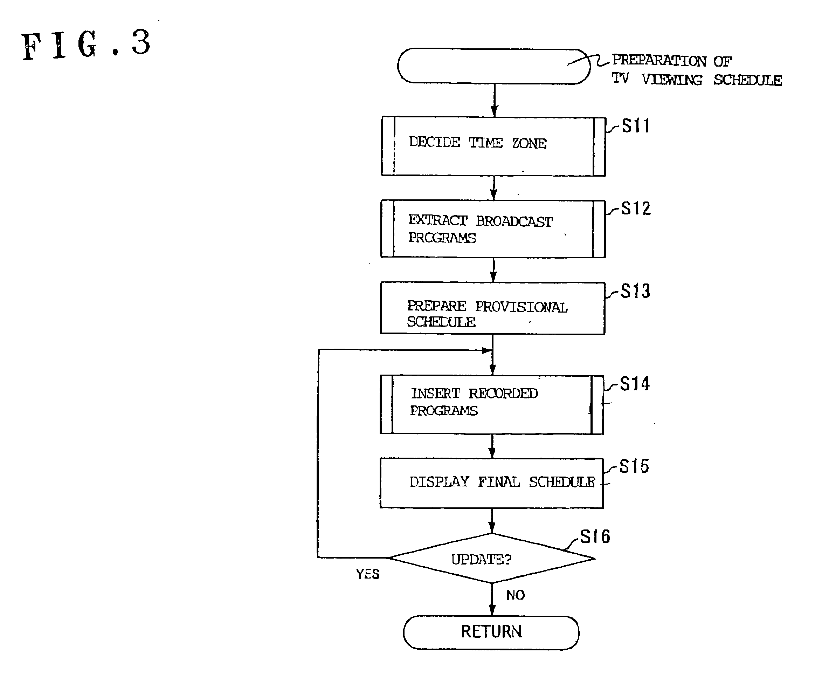

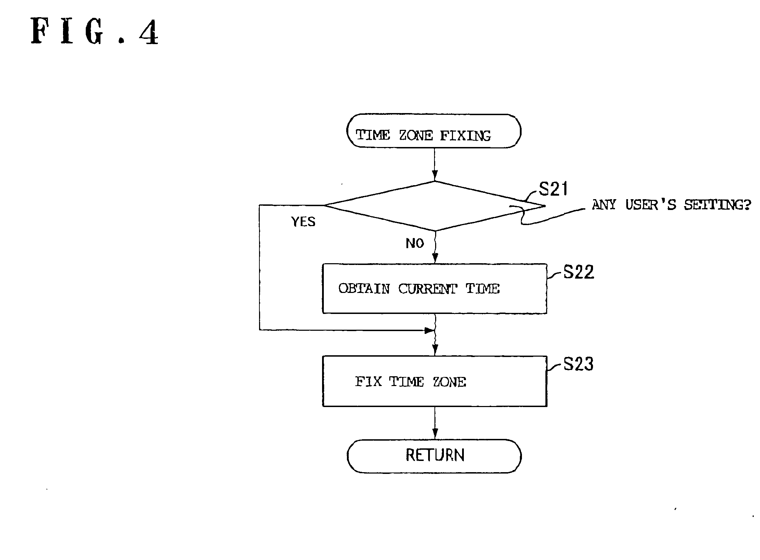

Referring to Figures 3 and 4, a process for preparing a TV viewing schedule that best fits the user's preference when the user wants to sequentially view scheduled TV programs and recorded TV programs will be described.

Figure 3 is a flowchart of a main routine for preparing a TV viewing schedule . The TV viewing schedule is produced under the control of the system controller 10.

The system controller 10 first determines a time zone (from what time to what time in a day), during which the user wants to rely upon the TV viewing schedule. To this end, the system controller 10 executes a time zone decision subroutine in response to a schedule preparation command, so as to determine from what time to what time the time zone extends (Step S11). The schedule preparation, command is entered by the user manually, or issued automatically in accordance with software installed beforehand.

Figure 4 illustrates a flowchart of the time zone decision subroutine. At first, it is determined whether or not the user has designated a time zone of a TV viewing schedule (Step S21). If the user designates the time zone, the designated time zone is used as the time zone of the TV viewing schedule (Step S23). If the user does not designated the time zone, the system controller 10 obtains the present time (Step S22), and decides a certain period of time from the present time (for example, three hours or twenty four hours) as the time zone (Step S23). It should be noted that the system controller 10 may decide the time zone such that the time zone starts from some time later after the present time. For example, if a TV program is currently broadcast, the system controller 10 is able to decide the time zone to start after the TV program is complete. In a more specific example, if the present time is 8,23 and the predetermined period is three hours, then the system controller 10 decides the time zone to start from 8:30 and to end at 11:30 or to start from 9:00 and to end at 12:00. The following description deals with a case where the time zone is set to be from 20:00 to 23:00.

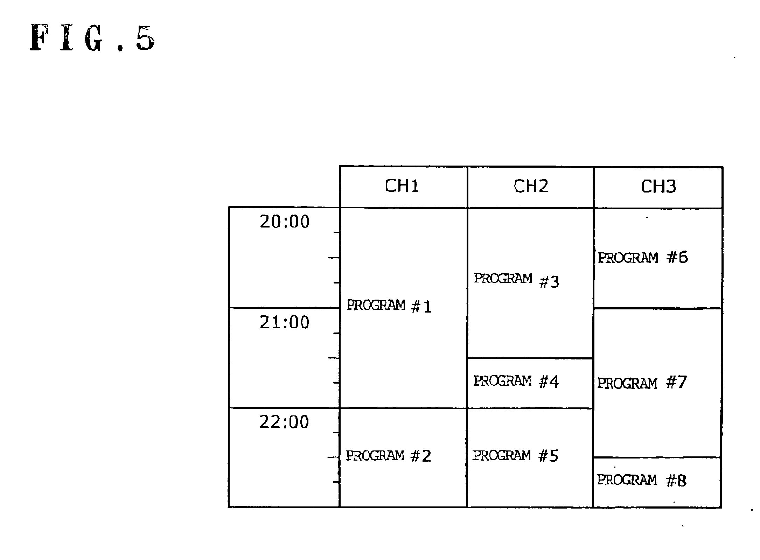

After the time zone decision subroutine (Figure 3, Step S11) fixes the time zone of the TV viewing schedule, a subroutine for selecting TV programs is executed (Step S12). In this TV program selection subroutine, TV programs are picked out from EPG data in accordance with the user's preference or selection. The EPG data is transmitted from TV stations. Figure 5 shows the EPG data for the time zone (from 20:00 to 23;00) determined in Step S11.

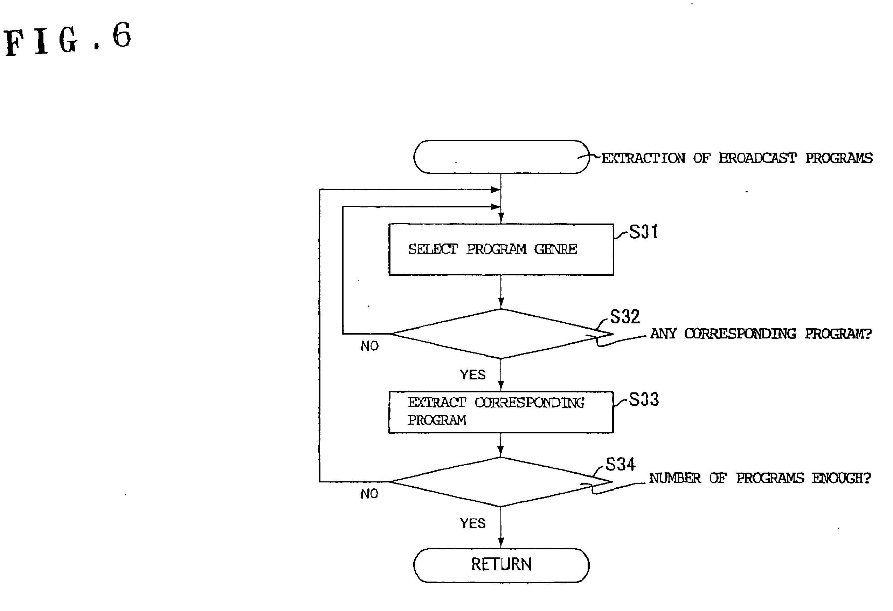

Figure 6 illustrates a flowchart of the TV program selection subroutine. At first, the genre is determined (Step S31). If the user specifies a certain genre, the specified genre is used in Step S31. If the user does not select the genre, the system controller 10 selects a genre which the user most prefers, on the basis of the data stored in the program information memory 20 (Step S31). For instance, "sports" is selected (see Figure 2). Then, it is determined whether or not there is a program or the selected genre in the EPG (Step S32). If there is a program corresponding (belonging) to the selected genre, this program is extracted (Step S33).

Next, it is determined whether or not a specific quantity of programs (or a predetermined number of programs) are selected with respect to the time zone (Step S34). For example, the answer at Step S34 becomes YES when 50 % of the time zone is occupied by the selected programs. Alternatively, the answer at Step S34 may be YES when two hours of the three-hour time zone is occupied by the selected programs, or when three programs are selected. If the number of the selected programs is insufficient (i.e., does not reach the specific quantity or number), the procedure returns to Step S31 to find another genre which the user likes second most (e.g., "news"; see Figure 2). Then. Steps S32 to S34 are repeated. If Step S34 determines that the specific quantity or number of programs are chosen, the procedure exits the subroutine and return to the main routine shown in Figure 3.

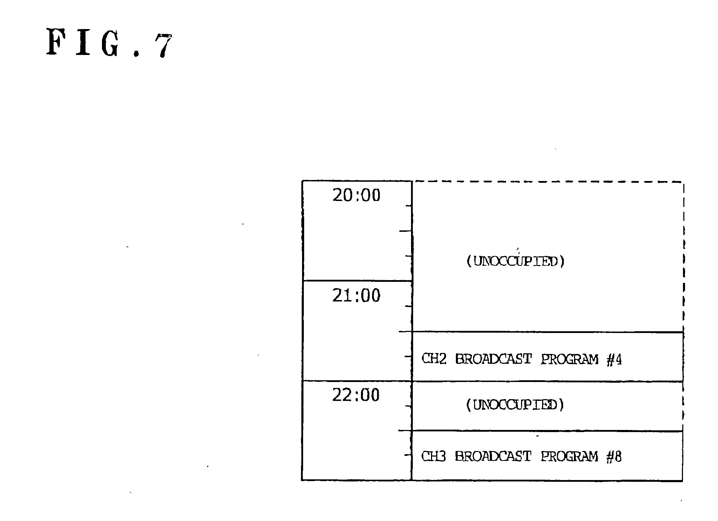

By using the TV programs extracted in the TV program selection subroutine (Figure 3, Step S12), a provisional (conditional) schedule is created (Step S13). Figure 7 shows an example of the provisional schedule. As illustrated, a TV program #4 on channel two(CH2) from 21:30 to 22:00 and a TV program #8 on channel three (CH3) from 22:30 to 24:00 are extracted from the EPG and placed in the provisional schedule. Other areas in the provisional schedule are vacant.

After Step S13, a subroutine for inserting recorded programs into the provisional schedule is executed (step S14).

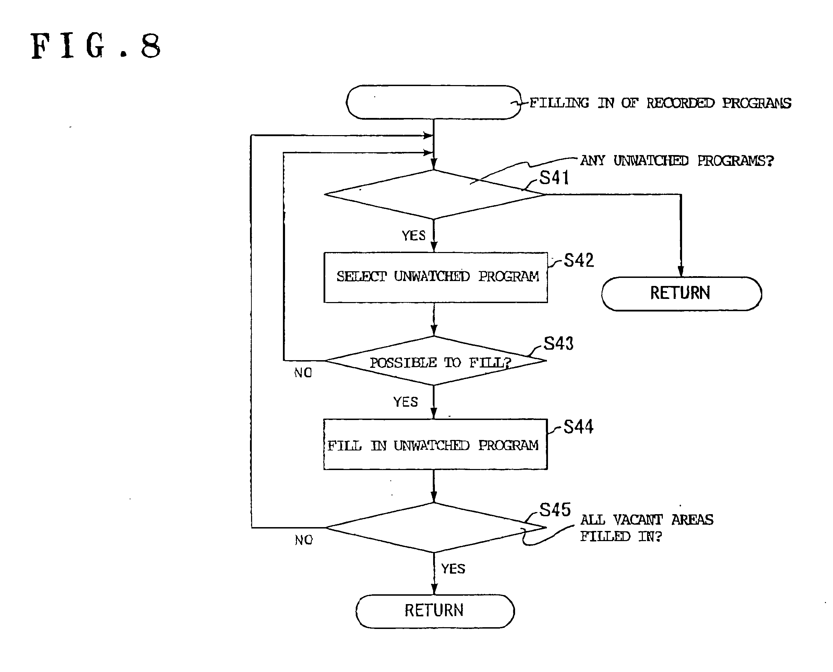

Figure 8 illustrates a flowchart of the recorded program insertion subroutine. At first, it is determined whether or not there are any TV programs that have not been viewed from the TV programs stored in the recording unit 2 (Step S41). If there is no TV program that has not been viewed, the procedure exits the subroutine and returns to the main routine. If there are unviewed (unwatched) TV programs, one of such programs is selected (Step S42). It should be noted that the unviewed TV programs may include not only a program that has not been viewed at all but also a program that has been partly viewed. Information with regard to the partly viewed TV program is stored in the program information memory 20. For example, information that only the first thirty minutes of a one-hour TV program have been viewed is stored in the program information memory 20.

Subsequently, it is determined whether or not the selected unviewed TV program can fit in a vacant area (designated by "unoccupied" in Figure 7) of the provisional schedule (Step S43). It should be noted that when a partly viewed TV program is allocated in the vacant area of the schedule, the entire TV program including a part already viewed may be inserted. Alternatively, only the part that has not been viewed may be allocated in the vacant area of the schedule. In the above described example, only the second thirty minutes of the one-hour TV program may be allocated.

If Step S43 determines that the recorded program does not fit in the provisional schedule, the procedure returns to Step S41 to repeat the above described steps. If Step S43 determines that the recorded program can fit in the provisional schedule, the recorded program is placed in the corresponding vacant area of the TV viewing schedule (Step S44). Then, it is determined whether all the vacant areas in the TV viewing schedule are filled with the unviewed programs (Step S45). If there is still vacant area in the TV viewing schedule, the procedure returns to Step S41 to repeat the above described steps. When all the vacant areas are occupied by the unviewed TV programs, the procedure exits the subroutine and returns to the main routine.

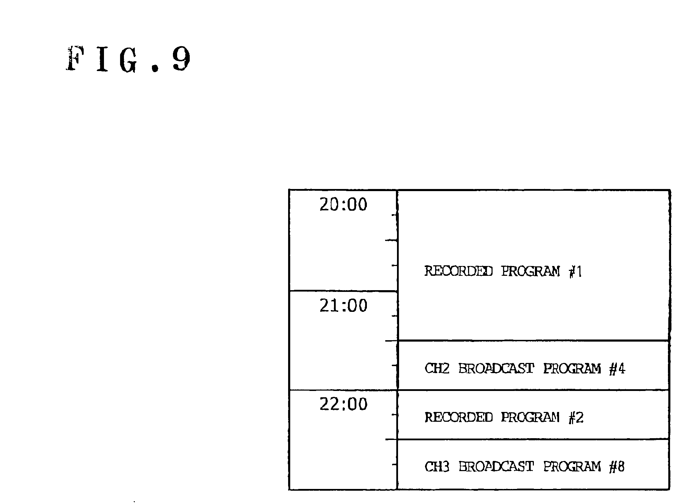

Figure 9 illustrates an example of the TV viewing schedule (i.e., final schedule) after the recorded program insertion subroutine. The unviewed, recorded program #1 is allocated to the time frame of 20:00 to 21:30 and the unviewed, recorded program #2 is allocated to the time frame of 22:00 to 22:30. These time frames are the unoccupied time frames in the provisional schedule shown in Figure 7. It should be noted that the final schedule may include an unoccupied time frame.

Returning to the main routine (Figure 3), the final schedule is displayed on the screen of the display device 50 (Step S15). Next, it is determined whether or not there is a schedule update request from the user (Step S16). If the user is not satisfied with the contents of the TV viewing schedule, the user issues a schedule update request by operating the remote controller 8. If the schedule update request is issued, the procedure returns to Step S14 so that Steps S14 to S16 are executed again. If the schedule update request is not issued, the schedule preparing routine is finished.

It should be noted that the present invention is not limited to the illustrated and described embodiments. Various changes and modifications may be made by those skilled in the art without departing from the spirit and scope of the present invention, which is defined by the appended claims.

### In summary, the invention can be described as follows:

A plurality of programs are broadcast from at least one station. A system for preparing a program viewing schedule includes a program guide extractor for extracting a broadcast program guide. The broadcast program guide includes program characteristic data. The system also includes a frequency data generator for generating frequency data with regard to the program characteristic data, based on a program viewing history and/or a program recording history. A recorded program data extractor of the system extracts recorded program data. The recorded program data includes a time needed to record each program. A broadcast program allocator of the system selects a program from the broadcast program guide, based on the frequency data, and allocates the selected program in the program viewing schedule. A recorded program allocator of the system determines which program has not been viewed among the recorded programs, and allocates the unwatched program into a vacant area in the program viewing schedule.

## Claims

1. A system for preparing a program viewing schedule, comprising:
a program guide extractor for extracting a broadcast program guide including program characteristic data, a plurality of programs being broadcast from at least one station;
a frequency data generator for generating frequency data with regard to the program characteristic data, based on at least one of a program viewing history and a program recording history;
a recorded program data extractor for extracting recorded program data, the recorded program data including a time needed to record each program;
a broadcast program allocator for selecting a program from the broadcast program guide, based on the frequency data, and allocating the selected program in the program viewing schedule; and
a recorded program allocator for determining an unwatched program from the recorded programs, and allocating the unwatched program to a vacant area in the program viewing schedule.

2. The system according to claim 1 further comprising a display data generating unit for generating display data to display the program viewing schedule.

3. The system according to claim 1 or 2 further comprising a setting unit for setting a time zone which the program viewing schedule covers.

4. The system according to any of claims 1 to 3, wherein said broadcast program allocator allocates at least one program until a predetermined percentage of the program viewing schedule is occupied by the at least one program allocated.

5. The system according to any of claims 1 to 4, wherein said recorded program allocator determines that a program not completely viewed is the unwatched program.

6. A method of preparing a program viewing schedule, comprising the steps of:
A) extracting a broadcast program guide including program characteristic data, a plurality of programs being broadcast from at least one station;
B) producing frequency data with regard to the program characteristic data, based on at least one of a program viewing history and a program recording history;
C) extracting recorded program data, including a time needed to record each program;
D) selecting a program from the broadcast program guide, based on the frequency data, and allocating the selected program in the program viewing schedule; and
E) determining which program is an unwatched program from the recorded programs, and allocating the unwatched program to a vacant area in the program viewing schedule.

7. The method according to claim 6 further comprising the step of generating display data to display the program viewing schedule.

8. The method according to claim 6 or 7 further comprising the step of determining a time zone the program viewing schedule covers.

9. The method according to any of claims 6 to 8 further comprising the step of determining a time zone the program viewing schedule covers, and wherein Step D allocates at least one program until a predetermined percentage of the program viewing schedule is occupied by the at least one program allocated.

10. The method according to any of claims 6 to 9, wherein Step D determines that a program not completely viewed is the unwatched program.
